# FASCICULE DE BREVET EUROPEEN

(11) **EP 3 566 115 B1**
(45) Date de publication et mention de la délivrance du brevet: **08.12.2021**
(21) Numéro de dépôt: 17832312.7
(22) Date de dépôt: 29.12.2017
(51) Int. Cl.: G06F 3/041, G06F 3/0354

(54) **INTERFACE TACTILE COMPORTANT UN CAPTEUR DE FORCE**
BERÜHRUNGSSCHNITTSTELLE MIT EINEM KRAFTSENSOR
TOUCH INTERFACE INCLUDING A FORCE SENSOR

(30) Priorité: 03.01.2017 FR 1750047
(43) Date de publication de la demande: 13.11.2019
(73) Titulaire: Hap2u, 38400 Saint-Martin-d'Hères (FR)
(72) Inventeur: VEZZOLI, Eric, 38000 Grenoble (FR); CHAPPAZ, Cédrick, 38530 Pontcharra (FR)
(74) Mandataire: INNOV-GROUP
(86) Numéro de dépôt international: PCT/FR2017/053866
(87) Numéro de publication internationale: WO 2018/127651

(56) Documents cités:
- EP-A1- 1 956 466
- EP-A1- 2 350 795
- EP-A1- 2 707 787
- EP-A2- 1 645 947
- EP-A2- 2 432 126
- EP-A2- 2 939 862
- FR-A1- 2 927 574
- US-A1- 2004 164 970
- US-A1- 2010 225 596
- US-B1- 6 741 237
- US-B2- 8 780 053
- Anonymous: "Lamb waves - Wikipedia", , 31 décembre 2016 (2016-12-31), XP055407541, Extrait de l'Internet: URL:https://en.wikipedia.org/wiki/Lamb_wav es [extrait le 2017-09-18]
- MELISANDE BIET ET AL: "Squeeze film effect for the design of an ultrasonic tactile plate", IEEE TRANSACTIONS ON ULTRASONICS, FERROELECTRICS AND FREQUENCY CONTROL, IEEE, US, vol. 54, no. 12, 1 décembre 2007 (2007-12-01), pages 2678-2688, XP011200042, ISSN: 0885-3010, DOI: 10.1109/TUFFC.2007.596 cité dans la demande

## Description

### DOMAINE TECHNIQUE

L'invention est une interface tactile, par exemple un écran, apte à être touchée par un effecteur, par exemple un doigt, l'interface tactile étant configurée pour mesurer une force exercée par l'effecteur touchant la plaque.

### ART ANTERIEUR

L'essor des écrans tactiles, notamment appliqués à des dispositifs nomades de type tablette ou téléphone portable, s'accompagne de nombreux développements. Ces écrans comportent généralement une surface de contact lisse sur laquelle il est possible de piloter différents paramètres ou applications logiciels par le contact avec un doigt. Des dispositifs ont été développés, permettant de ressentir une sensation de texture lorsqu'un doigt d'un utilisateur est appliqué sur de telles surfaces de contact. Un tel dispositif est par exemple décrit dans la publication Biet M.,"Squeeze film effect for the design of an ultrasonic tactile plate", IEEE Transactions on Ultrasonic, Ferroelectrics and Frequency Control, IEEE, 2007, 54 (12), pp.2678 - 2688, désignée par la suite Biet 2007, ou encore dans la demande de brevet EP1956466. Dans ces documents, on décrit une interface tactile comportant une plaque lisse, formant une surface de contact destinée à être touchée par un doigt. Cette plaque est mise en vibration par plusieurs transducteurs piézoélectriques, disposés au contact de la plaque, en dessous de cette dernière. Les transducteurs et la plaque forment un résonateur propice à la formation d'une onde de flexion stationnaire, de type onde de Lamb. Lorsque la fréquence de résonance de vibration de la surface de contact est dans le domaine ultrasonore, par exemple entre 10 kHz et 100 kHz, et que l'amplitude de la vibration est faible, typiquement de quelques microns, l'utilisateur peut ressentir une texturation de la surface de contact, lorsque le doigt glisse le long de ladite surface. Cet effet est connu et est usuellement désigné par le terme "squeeze film". L'utilisateur peut ainsi percevoir une sensation de rugosité, ou une certaine résistance au glissement, alors que la surface de contact reste lisse.

Cet effet a été appliqué à des surfaces de contact transparentes, pouvant former des écrans. C'est notamment le cas du brevet US8780053, ou encore du brevet EP2707787. Dans ces documents, les transducteurs piézoélectriques sont disposés à proximité des bordures d'une surface de contact, et permettent une mise en vibration résonante de cette dernière.

Le document US2010/0225596 décrit une interface tactile comportant un film élastomère souple. Le film élastomère est tendu et mis en vibration par des transducteurs. Sous l'effet d'un contact avec un doigt d'un utilisateur, l'onde de vibration est modifiée et cette modification est détectée par les transducteurs.

Le document EP2939862 décrit une interface tactile équipant le tableau de bord d'une voiture. L'interface comporte une face transparente et comportant des capteurs de pression pour détecter une pression exercée par le doigt d'un utilisateur. Les documents EP2432126A2, EP2350795A1, FR2927574A1, US6741237 et US2004164970 décrivent des procédés permettant de détecter et/ou localiser un contact entre un doigt, ou un stylet, sur une interface.

Par ailleurs, la plupart des écrans tactiles actuels comportent des capteurs permettant une détection du contact d'un doigt de l'utilisateur par effet capacitif. Pour cela, la surface de contact comporte un maillage conducteur transparent, de façon à localiser la zone de l'écran touchée par le doigt d'un utilisateur. La détection de contact est suffisamment performante pour permettre de piloter un dispositif comportant un tel écran tactile par la position du doigt ou par la trajectoire du doigt le long de l'écran, ou encore par des paramètres dynamiques de déplacement du doigt, tels qu'une vitesse ou une accélération. Cependant, si la détection capacitive est performante pour localiser un impact d'un doigt sur un écran, elle ne permet pas de quantifier la force exercée par le doigt. La détection de l'impact est une détection de type tout ou rien, et ne détermine que le contact d'un doigt ou l'absence de contact. La présente invention vise à remédier à cela, en proposant un dispositif permettant une quantification de la force exercée par un doigt, ou tout autre type d'effecteur, sur une interface tactile.

### EXPOSE DE L'INVENTION

Un premier objet de l'invention est une interface tactile selon la revendication 1.

Le dispositif peut comporter l'une des caractéristiques suivantes, prises isolément ou selon les combinaisons techniquement réalisables :
- Chaque transducteur exerce une pression modulée périodiquement, c'est-à-dire oscillante, sur la plaque
- La plaque est délimitée par une première bordure latérale, la plaque étant reliée à une pluralité de transducteurs d'actionnement alignés parallèlement à la première bordure latérale, au moins un détecteur étant disposé au voisinage d'une deuxième bordure latérale, la deuxième bordure latérale étant opposée à la première bordure latérale.
- Les transducteurs d'actionnement (10ₙ) sont configurés de telle sorte que :
   l'amplitude de l'onde de flexion est inférieure à 10 µm, voire inférieure à 5 µm ;
   et/ou la fréquence de résonance est supérieure à 10 kHz ;
   et/ou la longueur d'onde (λ) de l'onde de flexion (4) est comprise entre 1 mm et 40 mm.
- Le circuit de traitement est configuré pour appliquer une fonction de calibration au signal d'atténuation de façon à estimer l'intensité de la force appliquée par l'effecteur. La fonction de calibration prise en compte par le circuit de traitement est prédéterminée.
- Au moins un transducteur d'actionnement est un transducteur piézoélectrique ou un transducteur électromécanique de type MEMS.
- Au moins un détecteur est un transducteur piézoélectrique ou un transducteur électromécanique.
- Au moins un détecteur est disposé au contact de la plaque.
- La plaque est transparente, ou comporte une partie transparente.
- L'interface tactile est destinée à générer un signal, dit signal de commande, pour piloter un dispositif, par exemple une machine ou un microprocesseur, le signal de commande dépendant de l'intensité de la force estimée.

Un deuxième objet de l'invention est un procédé selon la revendication 7.

L'onde de flexion formée lors de l'étape a) est de préférence une onde stationnaire. De préférence, l'onde de flexion formée lors de l'étape a) comporte au moins une des caractéristiques suivantes :
- son amplitude est inférieure à 10 µm, voire inférieure à 5 µm ;
- la fréquence de résonance est supérieure à 10 kHz, en étant avantageusement inférieure à 200 kHz ;
- sa longueur d'onde est comprise entre 1 mm et 40 mm.

L'onde de flexion formée lors de l'étape a) peut être générée par une pluralité de transducteurs d'actionnement, s'étendant parallèlement à une bordure de la plaque. Les transducteurs peuvent se déformer de façon périodique, au contact de la plaque, de façon à entraîner la formation de l'onde de flexion.

L'étape d) peut comporter les sous-étapes suivantes :
di) prise en compte d'une fonction de calibration ;
dii) application de ladite fonction de calibration au signal d'atténuation déterminé lors de l'étape c).

Dans l'étape d), la valeur de l'intensité de la force estimée peut être affectée à une valeur comprise entre une valeur minimale et une valeur maximale, plusieurs valeurs intermédiaires étant comprises entre ladite valeur minimale et ladite valeur maximale.

Le procédé peut être mis en œuvre à l'aide d'une interface tactile selon le premier objet de l'invention.

Un troisième objet de l'invention est un procédé de contrôle d'un dispositif à l'aide d'une interface comportant une surface de contact formée sur une plaque, le dispositif étant apte à être contrôlé par un paramètre, le procédé comportant une application d'un effecteur sur la surface de contact de façon à régler une valeur du paramètre, le procédé comportant les étapes suivantes :
i) application de l'effecteur sur la surface de contact, au niveau d'une région de la surface de contact associée audit paramètre ;
ii) réglage de la valeur du paramètre, en fonction d'une estimation de la force exercée par l'effecteur sur la surface de contact, l'estimation étant obtenue en mettant en œuvre un procédé selon le deuxième objet de l'invention.

Entre l'étape i) et l'étape ii), un tel procédé peut comporter une étape i') de localisation d'une région de la surface de contact touchée par l'effecteur, et d'une sélection du paramètre en fonction de la région ainsi localisée. Le dispositif peut être une machine, notamment une machine robotisée, ou un microprocesseur.

Un quatrième objet de l'invention est un dispositif, apte à être contrôlé par un paramètre, et comportant une interface tactile configurée pour régler une valeur dudit paramètre en fonction d'une force appliquée, par un effecteur, sur une surface de contact d'une paroi de l'interface tactile, l'interface tactile correspondant au premier objet de l'invention. L'interface tactile peut comporter un circuit pour localiser une région de la surface de contact touchée par l'effecteur, et un circuit pour sélectionner le paramètre en fonction de ladite région. Le circuit peut être composé d'un circuit conducteur définissant un maillage de la surface de contact, et d'une unité de traitement pour déterminer une position de l'effecteur par rapport audit maillage, par exemple par effet capacitif.

D'autres avantages et caractéristiques ressortiront plus clairement de la description qui va suivre de modes particuliers de réalisation de l'invention, donnés à titre d'exemples non limitatifs, et représentés sur les figures listées ci-dessous.

### FIGURES

La figure 1A représente un exemple d'une interface tactile selon l'invention. La figure 1B est une coupe de la figure 1A. La figure 1C montre la formation d'une onde de flexion d'une plaque, cette dernière étant un composant de l'interface tactile.
Les figures 2A, 2B et 2C illustrent un premier exemple d'obtention d'un signal représentant une atténuation d'une vibration d'une plaque par le contact d'un doigt. Les figures 2D, 2E et 2F illustrent un deuxième exemple d'obtention d'un signal représentant une atténuation d'une vibration d'une plaque par le contact d'un doigt.
Les figures 3A et 3B montrent un exemple de détermination d'une fonction de calibration
Les figures 4A et 4B sont des exemples de mise en œuvre d'une interface, permettant une estimation d'une force d'appui exercée par un doigt sur l'interface.
La figure 5 montre un autre exemple d'une interface tactile selon l'invention.
La figure 6 représente un exemple d'application de l'interface tactile selon l'invention.

### EXPOSE DE MODES DE REALISATION PARTICULIERS

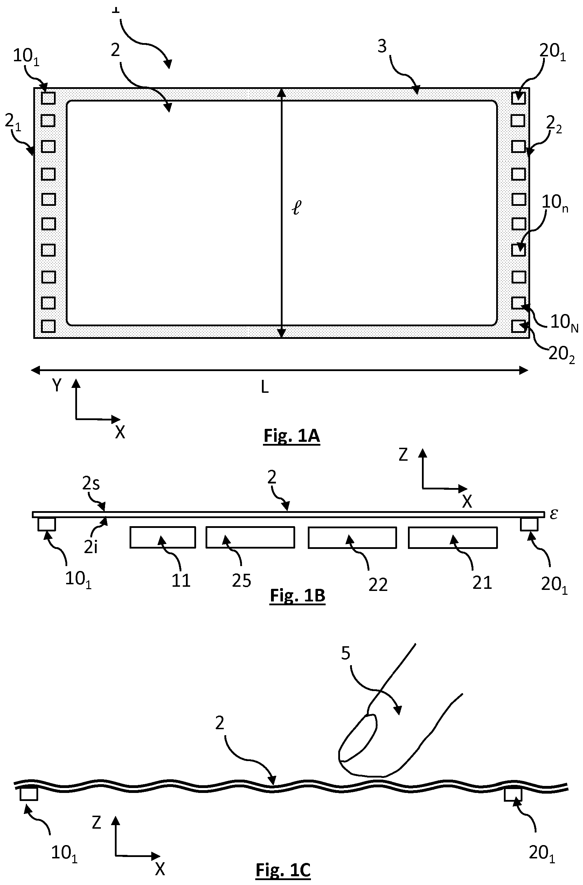

Les figures 1A et 1B représentent un exemple d'une interface tactile selon l'invention. L'interface comporte une plaque 2, s'étendant selon un plan XY, et formant, dans ce plan, un rectangle de longueur L (selon l'axe X) et de largeur ℓ (selon l'axe Y). Dans cet exemple, L = 195 mm, et ℓ =125 mm. L'épaisseur ε de la plaque, selon l'axe Z, est de 1.5 mm. Le terme plaque désigne un élément rigide peu épais par rapport à sa largeur ou sa longueur. La largeur et la longueur ne sont pas des paramètres critiques, et peuvent être comprises entre quelques cm, par exemple 3 cm, à 30 cm, ou davantage. L'interface tactile 1 est destinée à piloter un dispositif, par exemple une machine robotisée, ou un microprocesseur permettant l'exécution d'un logiciel. Ainsi, l'interface tactile est apte à fournir un signal de commande à destination du dispositif.

L'épaisseur ε doit permettre une vibration de la plaque 2 selon une onde de flexion 4 stationnaire, comme décrit ci-après. L'épaisseur ε dépend du matériau formant la plaque et de l'application visée, mais elle est de préférence inférieure à 10 mm, voire inférieure à 5 mm. Le matériau formant la plaque est, dans cet exemple du verre. D'autres matériaux peuvent convenir, en particulier des matériaux dont le module d'Young est compris entre 30 GPa et 100 GPa, et de préférence entre 30 et 80 GPa. Le matériau de la plaque peut être par exemple un polycarbonate, du PMMA (Polyméthacrylate de méthyle), ou autre polymère organique, ou de l'aluminium. Lorsque la plaque est destinée à recouvrir un écran tactile, elle est formée à partir d'un matériau transparent.

Dans cet exemple, la plaque 2 est délimitée par deux bordures latérales 2₁ et 2₂ au voisinage desquelles sont disposés des transducteurs d'actionnement 10₁...10_{N}. Par au voisinage, on entend à une distance inférieure à 2 cm. Dans cet exemple, N = 18. Dix transducteurs d'actionnement sont 10ₙ sont alignés parallèlement à une première bordure latérale 2₁, tandis que huit transducteurs d'actionnement 10ₙ sont alignés parallèlement à une deuxième bordure latérale 2₂, opposée à la première bordure latérale 2₁. L'indice n désigne un transducteur, n étant compris entre 1 et N. Les transducteurs d'actionnement 10ₙ sont aptes à se déformer périodiquement, au contact de la plaque 2, selon un axe Z, perpendiculairement au plan XY selon lequel s'étend la plaque, de façon à appliquer une pression oscillante sur la plaque. La plaque comporte une partie supérieure 2s, destinée à former une surface de contact, et une partie inférieure 2i. Dans cet exemple, les transducteurs d'actionnement sont appliqués contre la partie inférieure 2i de la plaque. Il s'agit de transducteurs piézoélectriques, comportant un matériau piézoélectrique, par exemple AlN, ZnO ou PZT, disposé entre deux électrodes. Les actionneurs piézoélectriques peuvent être rapportés contre la partie inférieure de la plaque 2i par collage. Ils peuvent également être réalisés sous la forme de couches minces, en formant un circuit intégré obtenu par des procédés de microtechnologies de fabrication.

La plaque 2 peut comporter un cache opaque 3 pour masquer les transducteurs d'actionnement. D'autres types de transducteurs d'actionnement sont envisageables, par exemple des dispositifs électromécaniques de type MEMS (acronyme de Microelectromechanical Systems, signifiant microsystème électromécanique), ou d'autres transducteurs aptes à transmettre une déformation mécanique périodique, selon un axe Z perpendiculaire au plan XY. Il peut s'agir par exemple de transducteurs magnétostrictifs ou électrostrictifs.

Les transducteurs d'actionnement 10ₙ, en se déformant, induisent un déplacement de la plaque 2 selon l'axe Z, c'est-à-dire selon une direction perpendiculaire au plan XY dans lequel elle s'étend. La déformation des transducteurs suit des oscillations. Une onde de flexion 4 est alors générée selon la longueur L de la plaque, se propageant selon l'axe longitudinal X. Compte tenu des dimensions de la plaque, et des propriétés du matériau la composant, notamment le module d'Young ou la densité, ainsi que du mode de résonance, on peut obtenir la formation d'une onde stationnaire, s'étendant selon l'axe longitudinal X, à une fréquence de résonance. Un exemple d'obtention d'une telle onde stationnaire est par exemple décrit dans la partie III de la publication "Biet 2007" citée en lien avec l'art antérieur, ou dans le brevet US8780053. Dans cet exemple, les transducteurs d'actionnement piézoélectriques sont activés de façon synchrone, par un signal d'alimentation sinusoïdal, ce dernier étant généré par une alimentation électrique 11. Le signal d'alimentation appliqué à chaque transducteur a, dans cet exemple, une même amplitude électrique, sans déphasage d'un transducteur à un autre. L'homme du métier sait adapter l'amplitude ou le déphasage de la tension d'alimentation de chaque transducteur, de façon à obtenir une onde de flexion stationnaire 4, se propageant le long de la plaque 2, selon un mode de résonance. La fréquence de résonance de l'onde de flexion 4 est de préférence supérieure à 10 kHz, et est de préférence inférieure à 200 kHz. Une telle plage de fréquence se situe dans le domaine des ultrasons, en n'occasionne pas de gêne acoustique. A La fréquence de résonance, une onde de flexion stationnaire 4 se forme le long de la plaque 2. La fréquence de résonance dépend du matériau constituant la plaque, de ses caractéristiques géométriques ainsi que des caractéristiques des transducteurs d'actionnement 10ₙ. Dans cet exemple, la fréquence de résonance est de 68 kHz. La longueur d'onde λ de l'onde de flexion 4 peut être comprise entre 3 mm et 40 mm. Dans cet exemple, la longueur d'onde λ est de 16 mm.

L'amplitude de l'onde de flexion est de préférence inférieure à 10 µm, et est de préférence inférieure à 5 µm ou 3 µm. Dans cet exemple, l'onde de flexion 4 est une onde de Lamb d'amplitude comprise entre 2 µm et 3 µm.

Chaque actionneur piézoélectrique 10ₙ s'étend selon une longueur (parallèlement à l'axe X) et une largeur (parallèlement à l'axe Y) d'environ 10 mm x 5 mm. L'espacement, selon l'axe Y, entre deux transducteurs piézoélectriques adjacents 10ₙ est égal à 5 mm. L'épaisseur de chaque transducteur piézoélectrique est ici voisine de 0.5 mm. Les transducteurs piézoélectriques peuvent être similaires à ceux décrits dans la publication Vezzoli E. "Texture rendering stratégies with a high fidelity capacitive visual-haptic friction control device", International Conférence on Human Haptic Sensing and Touch Enabled Computer Applications, pp 251-260, London, 2016.

La plaque 2 est également reliée à deux détecteurs 20₁ et 20₂. Dans cet exemple, chaque détecteur est un transducteur piézoélectrique similaire aux transducteurs d'actionnement 10ₙ préalablement décrits, n'ayant pas d'action motrice sur la plaque 2, mais permettant une détection de l'amplitude de vibration la plaque selon une fréquence de mesure, cette dernière étant pilotée par un microcontrôleur 25. La fréquence d'échantillonnage est ici égale à 10 kHz. Les détecteurs sont positionnés au niveau des ventres de l'onde de flexion 4.

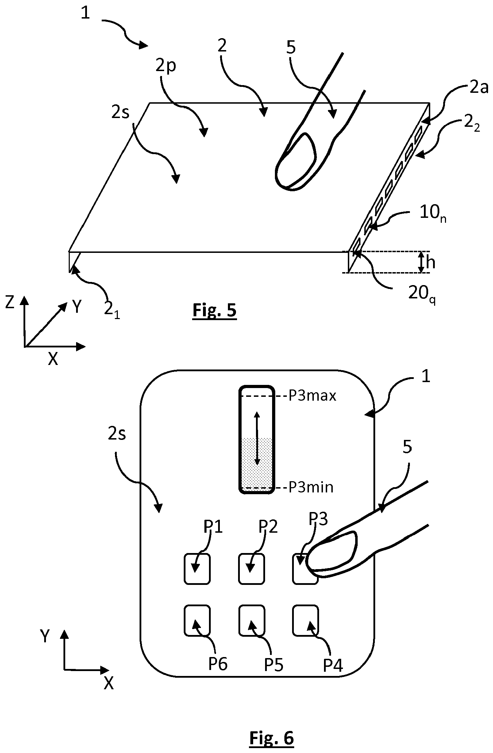

D'autres agencements, différents de celui représenté sur la figure 1A sont envisageables : les transducteurs d'actionnement piézoélectriques peuvent ne s'étendre que le long d'une seule bordure de la plaque, ou le long de 3 ou 4 bordures de la plaque. Ils peuvent également s'étendre jusqu'au centre de la plaque. Le nombre de transducteurs fonctionnant en détecteur 20 peut être compris entre 1 et 10, voire davantage. Un agencement particulier est représenté sur la figure 5, selon lequel les transducteurs d'actionnement 10ₙ et les détecteurs 20_{q} sont disposés perpendiculairement au plan XY de la plaque 2.

La figure 1B représente une vue en coupe de la plaque 2 représentée sur la figure 1A. L'interface 1 comporte un circuit de détection 21, couplé aux détecteurs 20₁, 20₂ ainsi qu'un circuit de traitement 22. Un microcontrôleur 25 permet le pilotage des transducteurs d'actionnement 10ₙ et des détecteurs 20_{q}. L'indice q désigne indifféremment un détecteur. Les transducteurs d'actionnement sont alimentés par une unité d'alimentation 11 générant un signal d'alimentation modulé V (tension), notamment sinusoïdal, de façon à permettre une déformation périodique des transducteurs d'actionnement 10ₙ.

Sous l'effet de la déformation des transducteurs d'actionnement 10ₙ, à la fréquence de résonance, une onde de flexion stationnaire 4 se forme, comme représenté sur la figure 1C. Sous l'effet de l'onde de flexion 4, la plaque 2 vibre, selon un mode de résonance, l'amplitude de vibration correspondant à l'amplitude de l'onde de flexion 4. Par amplitude, on entend une amplitude selon une direction perpendiculaire au plan XY selon lequel s'étend la surface de contact 2s.

L'amplitude de vibration peut être modulée par un contact d'un doigt 5, un élément rigide, ou par un autre effecteur, avec la surface de contact 2s. Les inventeurs ont établi qu'en mesurant l'atténuation résultant d'un tel contact, il est possible de non seulement de détecter le contact du doigt, mais également de quantifier une force appliquée par le doigt sur la plaque 2, perpendiculairement à cette dernière. L'effecteur 5 peut être un doigt ou un stylet. En mesurant l'atténuation de l'amplitude de vibration, on peut obtenir une mesure quantitative de la force exercée par le doigt. L'approche suivie diffère significativement des documents cités dans l'art antérieur, selon lesquels on utilise une onde vibratoire pour obtenir une sensation, par un doigt, d'une texture sur la plaque : selon une telle approche, le doigt agit en tant que détecteur d'un effet induit par la vibration de la plaque 2. Selon la présente invention, c'est la vibration de la plaque, et plus précisément l'atténuation de l'amplitude de vibration, qui permet la détection du contact du doigt 5, ainsi qu'une quantification de la force qu'il exerce sur la plaque 2, perpendiculairement au plan XY selon lequel s'étend la plaque.

Chaque détecteur 20_{q}, relié au circuit de détection 21, est apte à former un signal *Sₐₜₜ,* dit signal d'atténuation, représentant une atténuation de l'onde 4 sous l'effet du doigt 5. L'atténuation est d'autant plus importante que la force d'appui, exercée par le doigt sur la plaque, est élevée. Ainsi, une mesure de l'atténuation permet d'estimer l'intensité de la force d'appui du doigt sur la plaque. Les détecteurs sont activés selon une fréquence de mesure élevée, par exemple 1 kHz. Le circuit de détection 21, couplé aux détecteurs 20_{q}, permet d'obtenir un signal d'atténuation *Sₐₜₜ* , à chaque instant de mesure *t,* selon la fréquence de mesure. L'obtention du signal d'atténuation *Sₐₜₜ* sera décrite ci-après.

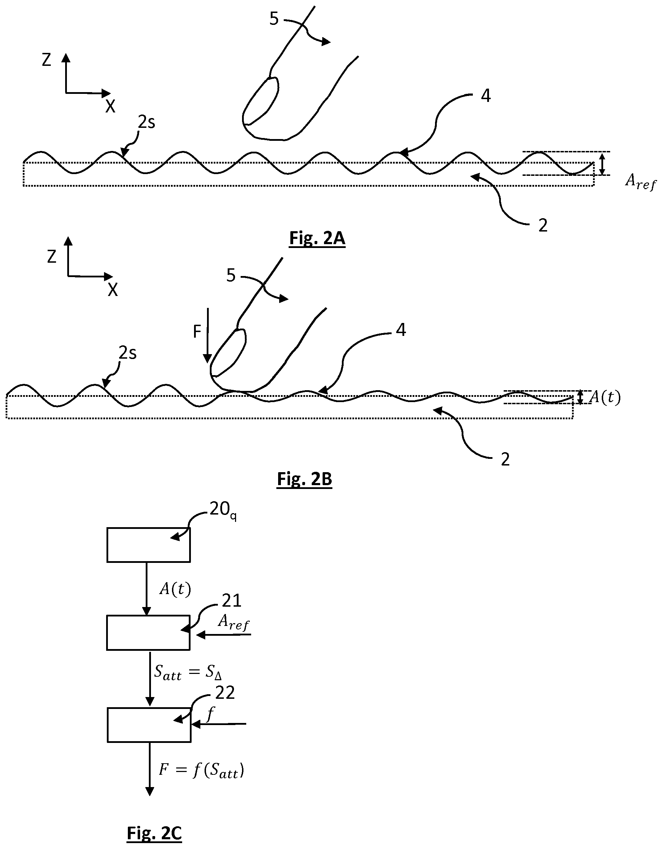

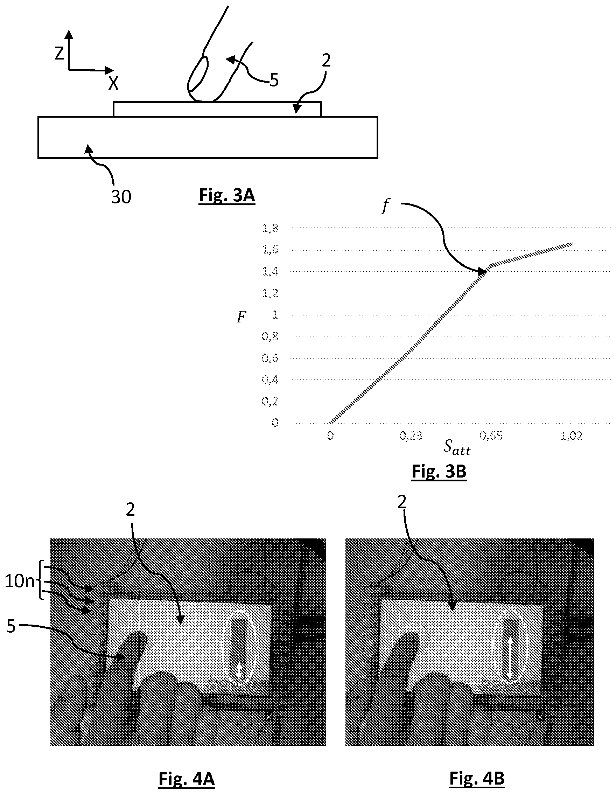

Le circuit de traitement 22 prend en compte le signal d'atténuation *Sₐₜₜ* fourni par le circuit de détection 21, à chaque instant de mesure, et estime, à partir de ce dernier, l'intensité de la force appliquée par le doigt. Une telle estimation peut notamment se baser sur une calibration, au cours de laquelle la force exercée par un doigt, ainsi que le signal d'atténuation *Sₐₜₜ,* sont simultanément mesurés. La calibration permet d'établir une fonction de calibration *ƒ* reliant l'intensité F de la force appliquée au signal d'atténuation *Sₐₜₜ,* de telle sorte que *F* = *ƒ*(*Sₐₜₜ*) (1). Une telle calibration est décrite ci-après, en lien avec les figures 3A à 3B. Les figures 2A, 2B et 2C illustrent un exemple, non couvert par l'invention revendiquée, de formation d'un signal d'atténuation *Sₐₜₜ.* La figure 2A représente la plaque 2 vibrant selon un mode résonant, sans subir le contact d'un doigt 5. L'amplitude de l'onde 4 correspond à une amplitude de référence *A_{ref}.* Lorsqu'un doigt 5 est appliqué sur la plaque 2, il génère une atténuation de l'amplitude de vibration, selon le même mode de résonance, ce qui se traduit par une diminution de l'amplitude mesurée par un détecteur, comme représenté sur la figure 2B. Chaque détecteur 20_{q} fournit une mesure de l'amplitude de vibration *A(t),* selon la fréquence de mesure déterminée par le microcontrôleur 25. Suite à chaque mesure de l'amplitude *A(t),* le circuit de détection 21 établit un signal dit de comparaison *S*_{Δ}(*t*) représentatif d'une comparaison entre l'amplitude mesurée *A(t)* et l'amplitude de référence *A_{ref}.* Par comparaison, on entend une différence ou un ratio. L'amplitude de référence *A_{ref}* peut être déterminée au cours d'une initialisation, par exemple au cours de la fabrication de l'interface 1, ou au cours d'une période d'initialisation, par exemple dans les premiers instants de fonctionnement de l'interface. Le signal de comparaison peut être proportionnel à une différence entre l'amplitude de référence et l'amplitude mesurée, de telle sorte que *S*_{Δ} ∝ (*A_{ref}* ― *A*(*t*)), le symbole ∝ désignant une relation de proportionnalité. Le signal de comparaison *S*_{Δ} représente l'atténuation produite par le doigt. Il forme ainsi le signal d'atténuation : *Sₐₜₜ* = *S*_{Δ}. Le circuit de traitement 22 estime ensuite l'intensité de la force appliquée, à partir du signal d'atténuation *Sₐₜₜ,* en utilisant la fonction de calibration *ƒ*, selon l'expression (1).

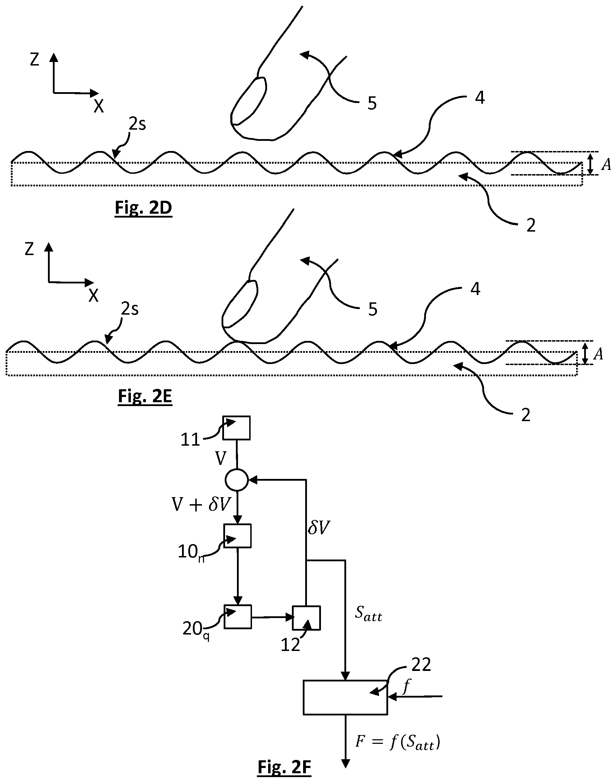

La formation d'un signal d'atténuation *Sₐₜₜ* selon l'invention revendiquée est représentée sur les figures 2D, 2E et 2F: le circuit de détection 21 fonctionne selon un mode dit en circuit fermé, comportant une boucle de rétroaction. Les figures 2D et 2E représentent une vibration de la plaque respectivement en l'absence de contact et en présence d'un doigt 5 s'appuyant sur la surface de contact 2s de la plaque 2. Lorsque le doigt est appuyé, la boucle de rétroaction agit sur le signal d'alimentation des transducteurs 10ₙ, de façon à maintenir une amplitude de vibration A sensiblement constante, c'est-à-dire constante à 5 ou 10% près, correspondant à une amplitude de consigne. La figure 2F schématise ce fonctionnement. Lorsqu'un ou plusieurs détecteurs 20_{q} détectent une diminution de l'amplitude, un bloc de correction 12 adresse un signal d'alimentation *δV,* dit de rétroaction, s'ajoutant à la tension d'alimentation V des transducteurs d'actionnement 10ₙ, de façon à moduler la puissance d'alimentation de ces derniers. L'amplitude de l'onde de flexion A est ainsi sensiblement constante, et correspond à l'amplitude de consigne. Le signal de rétroaction *δV* est représentatif de l'atténuation produite par le doigt. Il peut s'agir d'une tension s'ajoutant à la tension d'alimentation V. Ainsi, selon cet exemple, le signal d'atténuation dépend du signal de rétroaction *δV.* Par exemple, *Sₐₜₜ* ∝ *δV.*

Le circuit de traitement 22 estime ensuite l'intensité de la force appliquée, en fonction du signal d'atténuation *Sₐₜₜ,* en utilisant la fonction de calibration *ƒ*, selon l'expression (1).

On décrit à présent un exemple de calibration, permettant l'obtention de la fonction de calibration *ƒ*, en lien avec les figures 3A et 3B. Au cours de la calibration, la plaque 2 est reliée à un capteur de force 30, par exemple une balance ou un dynamomètre. Un doigt 5 est appliqué sur la plaque 2 selon une force d'appui d'intensité variable. L'intensité F de la force est mesurée par le capteur de force 30, et on mesure également le signal d'atténuation *Sₐₜₜ* correspondant à chaque intensité de force mesurée. On obtient une fonction de calibration *ƒ*, une telle fonction étant représentée sur la figure 3B.

La calibration peut dépendre des effecteurs. Si différents effecteurs sont utilisés, par exemple un doigt ou un stylet, il est préférable d'établir une calibration pour chaque type d'effecteur.

Les figures 4A et 4B représentent les résultats d'essais expérimentaux, réalisés selon une configuration similaire à celle décrite en lien avec les figures 1A et 1B. La plaque 2 est un écran transparent de verre. Le dispositif testé est une tablette comportant une application logicielle permettant de représenter le niveau d'intensité de la force mesurée sous la forme d'un graphe. Le graphe est entouré par un contour en pointillés blancs. Sur le graphe, le niveau d'intensité apparaît sous la forme d'une barre, dont la longueur varie avec l'intensité de la force mesurée. Un contour en pointillés blancs montre l'évolution de la barre entre la figure 4A (force d'appui faible) et la figure 4B (force d'appui plus importante).

L'invention permet une quantification précise de l'intensité de la force d'appui F. Elle peut permettre de discriminer au moins 5 niveaux d'appui différents, voire davantage, la dynamique de mesure pouvant comprendre 10 niveaux différents, voire plusieurs dizaines ou davantage, entre un niveau minimal *Fmin* et un niveau maximal *Fmax.* Ainsi, l'intensité de la force estimée est comprise entre une valeur minimale *Fmin* (par exemple une absence de contact) et une valeur maximale *Fmax,* l'intensité pouvant prendre au moins une, mais de préférence au moins 5 ou 10, voire davantage, valeurs intermédiaires comprises entre la valeur minimale *Fmin* et la valeur maximale *Fmax.* L'écart entre deux valeurs intermédiaires consécutives définit la précision de la mesure.

La figure 5 schématise un autre mode de réalisation, inspiré de la configuration décrite dans le brevet EP2707787. Selon ce mode de réalisation, la plaque 2 comporte une partie plane 2p, s'étendant entre une face inférieure 2i et une face supérieure 2s, la face supérieure 2s formant la surface de contact 2s. La partie plane s'étend selon un plan XY. Entre chaque bordure latérale 2₁ et 2₂, et la surface plane, la plaque comporte une partie, dite partie d'actionnement 2a, s'étendant perpendiculairement à la partie plane 2p, selon un plan YZ. Les transducteurs d'actionnement 10ₙ et les détecteurs 20_{q} sont disposés au contact de la partie d'actionnement 2a. La partie d'actionnement s'étend selon une hauteur, selon l'axe Z, de préférence inférieure à 2 cm. L'intersection entre la partie plane 2p et chaque partie d'actionnement 2a correspond de préférence à un nœud du mode de vibration de la plaque 2. Une telle configuration permet d'optimiser l'aire de la partie plane 2p, comme décrit dans brevet EP2707787.

L'interface tactile 1 peut être utilisée pour contrôler différents types de dispositifs. Lorsque la plaque 2 est transparente, elle peut former un écran tactile, et permettre un contrôle d'une application logicielle ou d'une machine en fonction de la force exercée par le doigt. Une telle interface peut équiper des dispositifs de communication nomades grand public, tels des téléphones portables ou des tablettes. Elle peut également être utilisée pour le contrôle commande d'un équipement, par exemple un équipement industriel. L'interface tactile permet d'ajouter un degré de liberté supplémentaire, en prenant en compte une information quant à l'intensité de la force appliquée par le doigt. Elle peut alors être combinée à une information de localisation du doigt, fournie par détection capacitive. La localisation du doigt permet une sélection d'un paramètre de fonctionnement à régler, l'intensité de la force appliquée permettant alors un réglage de la valeur du paramètre.

On a représenté, sur la figure 6, une interface tactile 1, dont la surface de contact 2s forme un écran tactile. Sur cet exemple, l'interface permet le réglage de six paramètres P1, P2, P3, P4, P5 et P6. A chaque paramètre correspond une région de l'écran, matérialisée par une icône. L'interface comporte un circuit de localisation de la position d'un doigt 5. Le circuit de localisation peut être basé sur une détection du doigt par effet capacitif. Lorsqu'un doigt est appliqué sur l'écran, l'interface détecte sa position sur l'écran, en fonction de laquelle le paramètre à régler est sélectionné. Dans l'exemple représenté, le paramètre réglé est le paramètre P3. En fonction de la force exercée par le doigt sur la surface de contact 2s, l'interface 1 génère un signal de commande permettant l'ajustement de la valeur du paramètre, entre une valeur minimale P3min et une valeur maximale P3max. L'invention permet la sélection d'une pluralité de paramètres et le réglage de chacun d'entre eux. L'étendue de l'invention est définie par les revendications annexées.

## Revendications

1. Interface tactile (1), comportant une surface de contact (2s) apte à être touchée par un effecteur (5), ladite surface de contact comportant :
▪ au moins
un transducteur (10₁....10_{N}), dit transducteur d'actionnement, apte à exercer une pression sur la surface de contact, de façon à former une onde de flexion stationnaire (4) s'étendant le long de la surface de contact (2s), selon une fréquence de résonance, entraînant une vibration de la surface de contact ; l'interface tactile comportant par ailleurs:
au moins un détecteur (20₁, 20₂), apte à détecter une amplitude de l'onde de flexion (4), chaque détecteur étant relié à un circuit de détection (21);
le circuit de détection (21) étant configuré pour former un signal, dit d'atténuation (*Sₐₜₜ*), représentatif d'une atténuation de l'onde de flexion (4) résultant d'un contact entre l'effecteur (5) et la surface de contact (2s) ;
un circuit de traitement (22), configuré pour estimer une intensité (F) d'une force appliquée, par l'effecteur, sur la surface de contact (2s), à partir du signal d'atténuation (*Sₐₜₜ*) ;
l'interface tactile étant **caractérisée en ce qu'**elle comporte une plaque, définissant la surface de contact, et
**en ce que** :
- chaque transducteur d'actionnement (10ₙ) est alimenté par un signal d'alimentation (V);
- le circuit de détection (21) est configuré pour établir un signal d'alimentation dit de rétroaction (*δV*) lorsque l'amplitude de l'onde de flexion (4), détectée par le détecteur (20₁, 20₂), s'écarte d'une valeur de consigne (A); le circuit de détection (21) étant configuré pour former le signal d'atténuation (*Sₐₜₜ*) en fonction du signal de rétroaction (*δV*).

2. Interface tactile selon la revendication 1, dans lequel la plaque (2) est délimitée par une première bordure latérale (2₁), la plaque étant reliée à une pluralité de transducteurs d'actionnement alignés parallèlement à la première bordure latérale (2₁), au moins un détecteur (20₁, 20₂) étant disposé au voisinage d'une deuxième bordure latérale (2₂), la deuxième bordure latérale étant opposée à la première bordure latérale.

3. Interface tactile selon l'une quelconque des revendications précédentes, dans lequel les transducteurs d'actionnement (10ₙ) sont configurés de telle sorte que :
- la fréquence de résonance est supérieure à 10 kHz;
- et/ou l'amplitude de l'onde de flexion (4), selon une direction perpendiculaire à la surface de contact (2s), est inférieure à 10 µm, voire inférieure à 5 µm;
- et/ou la longueur d'onde (λ) de l'onde de flexion (4) est comprise entre 1 mm et 40 mm.

4. Interface tactile selon l'une quelconque des revendications précédentes, dans lequel le circuit de traitement est configuré pour appliquer une fonction de calibration (*ƒ*) au signal d'atténuation (*Sₐₜₜ*) de façon à estimer l'intensité de la force appliquée par l'effecteur (5).

5. Interface tactile selon l'une quelconque des revendications précédentes dans laquelle :
au moins un transducteur d'actionnement (10ₙ) est un transducteur piézoélectrique ou un transducteur électromécanique de type MEMS ;
et/ou au moins un détecteur (20₁, 20₂) est un transducteur piézoélectrique ou un transducteur électromécanique.

6. Interface tactile selon l'une quelconque des revendications précédentes, dans laquelle la plaque (2) est transparente.

7. Procédé pour estimer une intensité d'une force exercée par un effecteur (5) s'appuyant sur une surface (2s), dite surface de contact, appartenant à une interface tactile (1), le procédé comportant les étapes suivantes :
a) formation, par au moins un transducteur d'actionnement (10ₙ), d'une onde de flexion stationnaire, l'onde de flexion (4) s'étendant le long de la surface de contact (2s), selon une fréquence de résonance;
b) mesure, par un détecteur (20₁, 20₂), d'une amplitude *(A(t))* de l'onde de flexion (4) à un instant, dit instant de mesure (t),;
c) en fonction de la mesure obtenue lors de l'étape b), obtention d'un signal d'atténuation (*Sₐₜₜ*), représentatif d'une atténuation de l'onde de flexion (4) sous l'effet de la force;
d) estimation de l'intensité de la force (F), à l'instant de mesure, en fonction du signal d'atténuation (*Sₐₜₜ*) obtenu lors de l'étape c) ;
le procédé étant **caractérisé en ce que** la surface de contact (2s) est définie par une plaque (2), et **en ce que** :
lors de l'étape a), chaque transducteur d'actionnement (10ₙ) est alimenté par un signal d'alimentation (V) ;
l'étape b) comporte, une formation d'un signal d'alimentation, dit de rétroaction, en fonction de l'amplitude *(A(t))* mesurée à chaque instant de mesure, lorsque l'amplitude mesurée s'écarte d'une valeur de consigne (*A*);
l'étape c) comporte une formation du signal d'atténuation en fonction du signal de rétroaction (*δV*).

8. Procédé selon la revendication 7, dans lequel lors de l'étape a), l'onde de flexion est formée par une pluralité de transducteurs d'actionnement (10ₙ), s'étendant parallèlement à une bordure (2₁, 2₂) de la plaque.

9. Procédé selon l'une quelconque des revendications 7 ou 8, dans lequel :
- la fréquence de résonance est supérieure à 10 kHz;
- et/ou l'amplitude de l'onde de flexion (4), selon une direction perpendiculaire à la surface de contact (2s), est inférieure à 10 µm, voire inférieure à 5 µm;
- et/ou la longueur d'onde (λ) de l'onde de flexion (4) est comprise entre 1 mm et 40 mm.

10. Procédé selon l'une quelconque des revendications 7 à 9, dans lequel l'étape d) comporte les sous-étapes suivantes :
di) prise en compte d'une fonction de calibration (*ƒ*);
dii) application de ladite fonction de calibration au signal d'atténuation (*Sₐₜₜ*) déterminé lors de l'étape c).

11. Procédé selon l'une quelconque des revendications 7 à 10, dans lequel lors de l'étape d), la valeur de l'intensité estimée est affectée à une valeur comprise entre une valeur minimale (*Fmin*) et une valeur maximale *(Fmax),* plusieurs valeurs intermédiaires étant comprises entre ladite valeur minimale et ladite valeur maximale.

12. Procédé de contrôle d'un dispositif à l'aide d'une interface tactile (1) comportant une surface de contact (2s) formée sur une plaque (2), le dispositif étant apte à être contrôlé par un paramètre (P1, P2, P3, P4, P5, P6), le procédé comportant une application d'un effecteur (5) sur la surface de contact de façon à régler une valeur du paramètre, le procédé comportant les étapes suivantes :
i) application de l'effecteur (5) sur la surface de contact, au niveau d'une région de la surface de contact associée audit paramètre ;
ii) réglage de la valeur du paramètre, en fonction d'une estimation de la force exercée par l'effecteur sur la surface de contact, l'estimation étant obtenue en mettant en oeuvre un procédé objet de l'une quelconque des revendications 7 à 11.

13. Procédé selon la revendication 12, comportant, entre l'étape i) et l'étape ii), une étape i') de localisation d'une région de la surface de contact touchée par l'effecteur, et d'une sélection du paramètre en fonction de la région ainsi localisée.

14. Dispositif, apte à être contrôlé par un paramètre (P1, P2, P3, P4, P5, P6), et comportant une interface tactile (1) configurée pour régler une valeur dudit paramètre en fonction d'une force appliquée, par un effecteur (5) sur une surface de contact (2s) d'une paroi (2) de l'interface tactile, l'interface tactile étant l'objet de l'une quelconque des revendications 1 à 6.

15. Dispositif selon la revendication 14, dans lequel l'interface tactile comporte également un circuit apte à localiser une région de la surface de contact touchée par l'effecteur, et un circuit configuré pour sélectionner le paramètre en fonction de ladite région.

## Patentansprüche

1. Berührungsschnittstelle (1), die eine Kontaktfläche (2s) umfasst, die dazu fähig ist, durch einen Effektor (5) berührt zu werden, wobei die Kontaktfläche Folgendes umfasst:
• mindestens einen Wandler (10₁....10_{N}), der als Betätigungswandler bezeichnet wird und dazu fähig ist, einen Druck auf die Kontaktfläche auszuüben, um eine stationäre Biegewelle (4) zu bilden, die sich gemäß einer Resonanzfrequenz entlang der Kontaktfläche (2s) erstreckt und eine Schwingung der Kontaktfläche bewirkt; wobei die Berührungsschnittstelle ferner Folgendes umfasst:
• mindestens einen Detektor (20₁, 20₂), der dazu fähig ist, eine Amplitude der Biegewelle (4) zu detektieren, wobei jeder Detektor mit einer Detektionsschaltung (21) verbunden ist;
• wobei die Detektionsschaltung (21) dazu konfiguriert ist, ein Signal, das als Dämpfungssignal (*Sₐₜₜ*) bezeichnet wird, zu bilden, das für eine Dämpfung der Biegewelle (4), die sich aus einem Kontakt zwischen dem Effektor (5) und der Kontaktfläche (2s) ergibt, repräsentativ ist;
• eine Verarbeitungsschaltung (22), die dazu konfiguriert ist, anhand des Dämpfungssignals (*Sₐₜₜ*) eine Stärke (F) einer durch den Effektor auf die Kontaktfläche (2s) aufgebrachten Kraft zu berechnen;
wobei die Berührungsschnittstelle **dadurch gekennzeichnet ist, dass** sie eine Platte umfasst, die die Kontaktfläche definiert, und dass:
- jeder Betätigungswandler (10ₙ) mit einem Versorgungssignal (*V*) versorgt wird;
- die Detektionsschaltung (21) dazu konfiguriert ist, ein Versorgungssignal, das als Rückkopplungssignal (*δV*) bezeichnet wird, festzulegen, wenn die Amplitude der Biegewelle (4), die durch den Detektor (20₁, 20₂) detektiert wird, von einem Sollwert (A) abweicht; wobei die Detektionsschaltung (21) dazu konfiguriert ist, das Dämpfungssignal (*Sₐₜₜ*) in Abhängigkeit von dem Rückkopplungssignal (*δV*) zu bilden.

2. Berührungsschnittstelle nach Anspruch 1, wobei die Platte (2) durch einen ersten Seitenrand (2₁) begrenzt wird, wobei die Platte mit einer Vielzahl von Betätigungswandlern verbunden ist, die parallel zu dem ersten Seitenrand (2₁) angeordnet sind, wobei mindestens ein Detektor (20₁, 20₂) in der Nähe eines zweiten Seitenrands (2₂) angeordnet ist, wobei sich der zweite Seitenrand gegenüber dem ersten Seitenrand befindet.

3. Berührungsschnittstelle nach einem der vorhergehenden Ansprüche, wobei die Betätigungswandler (10ₙ) so konfiguriert sind, dass:
- die Resonanzfrequenz größer als 10 kHz ist;
- und/oder die Amplitude der Biegewelle (4) gemäß einer zu der Kontaktfläche (2s) senkrechten Richtung kleiner als 10 µm, insbesondere kleiner als 5 µm ist;
- und/oder die Wellenlänge (λ) der Biegewelle (4) zwischen 1 mm und 40 mm liegt.

4. Berührungsschnittstelle nach einem der vorhergehenden Ansprüche, wobei die Verarbeitungsschaltung dazu konfiguriert ist, eine Kalibrierfunktion (*ƒ*) auf das Dämpfungssignal (*Sₐₜₜ*) anzuwenden, um die Stärke der durch den Effektor (5) aufgebrachten Kraft zu berechnen.

5. Berührungsschnittstelle nach einem der vorhergehenden Ansprüche, wobei:
• mindestens ein Betätigungswandler (10ₙ) ein piezoelektrischer Wandler oder ein elektromechanischer Wandler vom Typ MEMS ist;
• und/oder mindestens ein Detektor (20₁, 20₂) ein piezoelektrischer Wandler oder ein elektromechanischer Wandler ist.

6. Berührungsschnittstelle nach einem der vorhergehenden Ansprüche, wobei die Platte (2) transparent ist.

7. Verfahren zum Berechnen einer Stärke einer Kraft, die durch einen Effektor (5) ausgeübt wird, der auf eine Fläche (2s) drückt, die als Kontaktfläche bezeichnet wird und zu einer Berührungsschnittstelle (1) gehört, wobei das Verfahren die folgenden Schritte umfasst:
a) Bilden, durch mindestens einen Betätigungswandler (10ₙ), einer stationären Biegewelle, wobei sich die Biegewelle (4) gemäß einer Resonanzfrequenz entlang der Kontaktfläche (2s) erstreckt;
b) Messen, durch einen Detektor (20₁, 20₂), einer Amplitude *(A(t))* der Biegewelle (4) zu einem Zeitpunkt, der als Messzeitpunkt (t) bezeichnet wird;
c) in Abhängigkeit von der in Schritt b) erhaltenen Messung, Erhalten eines Dämpfungssignals (*Sₐₜₜ*), das für eine Dämpfung der Biegewelle (4) unter Einwirkung der Kraft repräsentativ ist;
d) Berechnen der Stärke der Kraft (F) zu dem Messzeitpunkt in Abhängigkeit von dem in Schritt c) erhaltenen Dämpfungssignal (*Sₐₜₜ*);
wobei das Verfahren **dadurch gekennzeichnet ist, dass** die Kontaktfläche (2s) durch eine Platte (2) definiert wird und dass:
• in Schritt a) jeder Betätigungswandler (10ₙ) mit einem Versorgungssignal (*V*) versorgt wird;
• Schritt b) ein Bilden eines Versorgungssignals, das als Rückkopplungssignal bezeichnet wird, in Abhängigkeit von der zu jedem Messzeitpunkt gemessenen Amplitude *(A(t))* umfasst, wenn die gemessene Amplitude von einem Sollwert *(A)* abweicht;
• Schritt c) ein Bilden des Dämpfungssignals in Abhängigkeit von dem Rückkopplungssignal (*δV*) umfasst.

8. Verfahren nach Anspruch 7, wobei in Schritt a) die Biegewelle durch eine Vielzahl von Betätigungswandlern (10ₙ) gebildet wird, die sich parallel zu einem Rand (2₁, 2₂) der Platte erstrecken.

9. Verfahren nach einem der Ansprüche 7 oder 8, wobei:
- die Resonanzfrequenz größer als 10 kHz ist;
- und/oder die Amplitude der Biegewelle **(4)** gemäß einer zu der Kontaktfläche (2s) senkrechten Richtung kleiner als 10 µm, insbesondere kleiner als 5 µm ist;
- und/oder die Wellenlänge (λ) der Biegewelle (4) zwischen 1 mm und 40 mm liegt.

10. Verfahren nach einem der Ansprüche 7 bis 9, wobei Schritt d) die folgenden Unterschritte umfasst:
di) Berücksichtigen einer Kalibrierfunktion (*ƒ*);
ii) Anwenden der Kalibrierfunktion auf das in Schritt c) bestimmte Dämpfungssignal (*Sₐₜₜ*).

11. Verfahren nach einem der Ansprüche 7 bis 10, wobei in Schritt d) der Wert der berechneten Stärke einem Wert zugewiesen wird, der zwischen einem Minimalwert *(Fmin)* und einen Maximalwert *(Fmax)* liegt, wobei zwischen dem Minimalwert und dem Maximalwert mehrere Zwischenwerte liegen.

12. Verfahren zur Steuerung einer Vorrichtung mit Hilfe einer Berührungsschnittstelle (1), die eine auf einer Platte (2) gebildete Kontaktfläche (2s) umfasst, wobei die Vorrichtung dazu fähig ist, durch einen Parameter (P1, P2, P3, P4, P5, P6) gesteuert zu werden, wobei das Verfahren ein Anwenden eines Effektors (5) auf die Kontaktfläche umfasst, um einen Wert des Parameters einzustellen, wobei das Verfahren die folgenden Schritte umfasst:
i)Anwenden des Effektors (5) auf die Kontaktfläche in einem Bereich der Kontaktfläche, der mit dem Parameter assoziiert ist;
ii)Einstellen des Werts des Parameters in Abhängigkeit von einer Berechnung der durch den Effektor auf die Kontaktfläche ausgeübten Kraft, wobei die Berechnung erhalten wird, indem ein Verfahren, das Gegenstand eines der Ansprüche 7 bis 11 ist, umgesetzt wird.

13. Verfahren nach Anspruch 12, das zwischen Schritt i) und Schritt ii) einen Schritt i') der Lokalisierung eines Bereichs der Kontaktfläche, der durch den Effektor berührt wird, und einer Auswahl des Parameters in Abhängigkeit von dem so lokalisierten Bereich umfasst.

14. Vorrichtung, die dazu fähig ist, durch einen Parameter (P1, P2, P3, P4, P5, P6) gesteuert zu werden, und die eine Berührungsschnittstelle (1) umfasst, die dazu konfiguriert ist, einen Wert des Parameters in Abhängigkeit von einer durch einen Effektor (5) auf eine Kontaktfläche (2s) einer Wand (2) der Berührungsschnittstelle aufgebrachten Kraft einzustellen, wobei die Berührungsschnittstelle Gegenstand eines der Ansprüche 1 bis 6 ist.

15. Vorrichtung nach Anspruch 14, wobei die Berührungsschnittstelle ferner eine Schaltung, die dazu fähig ist, einen Bereich der Kontaktfläche, der durch den Effektor berührt wird, zu lokalisieren, und eine Schaltung, die dazu konfiguriert ist, den Parameter in Abhängigkeit von dem Bereich auszuwählen, umfasst.

## Claims

1. A touch-sensitive interface (1), comprising contact surface (2s) designed to be touched by an effector (5), the contact surface comprising:
• at least one transducer (10₁....10_{N}), referred to as actuating transducer, designed to exert a pressure on contact surface, in such a manner as to form a stationary flexural wave (4) extending along the contact surface (2), according to a resonance frequency, driving a vibration of the contact surface;
the touch-sensitive interface further comprising:
• at least one detector (20₁, 20₂), designed to detect an amplitude of the flexural wave (4), each detector being connected to a detection circuit (21);
• the detection circuit (21) being configured for forming a signal, referred to as attenuation signal (*Sₐₜₜ*), representative of an attenuation of the flexural wave (4) resulting from a contact between the effector (5) and the contact surface (2s);
• a processing circuit (22), configured for estimating a magnitude (F) of a force applied, by the effector, onto the contact surface (2s), based on the attenuation signal (*Sₐₜₜ*);
the touch-sensitive interface being **characterized in that**
• it comprises a plate, defining the contact surface ;
and **in that**
• each actuating transducer (10ₙ) is supplied by a power supply signal (V);
• the detection circuit (21) is configured for establishing a power supply signal referred to as feedback signal (*δV*) when the amplitude of the flexural wave (4), detected by the detector (20₁, 20₂), differs from a setpoint value (A);
the detection circuit (21) being configured for forming the attenuation signal (*Sₐₜₜ*) as a function of the feedback signal (*δV*).

2. The touch-sensitive interface as claimed in claim 1, in which the plate (2) is bounded by a first lateral edge (2₁), the plate being connected to a plurality of actuating transducers aligned parallel to the first lateral edge (2₁), at least one detector (20₁, 20₂) being disposed in the vicinity of a second lateral edge (2₂), the second lateral edge being opposite to the first lateral edge.

3. The touch-sensitive interface as claimed in any one of the preceding claims, in which the actuating transducers (10ₙ) are configured in such a manner that:
- the resonance frequency is higher than 10 kHz;
- and/or the amplitude of the flexural wave (4), in a direction perpendicular to the contact surface (2s), is less than 10 µm, or even less than 5 µm;
- and/or the wavelength (λ) of the flexural wave (4) is in the range between 1 mm and 40 mm.

4. The touch-sensitive interface as claimed in any one of the preceding claims, in which the processing circuit is configured for applying a calibration function (*ƒ*) to the attenuation signal (*Sₐₜₜ*) in such a manner as to estimate the magnitude of the force applied by the effector (5).

5. The touch-sensitive interface as claimed in any one of the preceding claims in which:
• at least one actuating transducer (10ₙ) is a piezoelectric transducer or an electromechanical transducer of the MEMS type;
• and/or at least one detector (20₁, 20₂) is a piezoelectric transducer or an electromechanical transducer.

6. The touch-sensitive interface as claimed in any one of the preceding claims, in which the plate (2) is transparent.

7. A method for estimating a magnitude of a force exerted by an effector (5) pressing on a surface (2s), referred to as contact surface, belonging to a touch-sensitive interface (1), the method comprising the following steps:
a) formation, by at least one actuating transducer (10ₙ), of a stationary flexural wave, the flexural wave extending along the contact surface (2s), according to a resonance frequency;
b) measurement, by a detector (20₁, 20₂), of an amplitude *(A(t))* of the flexural wave (4) at a given time, referred to as measurement time (t);
c) as a function of the measurement obtained during the step b), obtaining an attenuation signal (*Sₐₜₜ*) representative of an attenuation of the flexural wave (4) under the effect of the force;
d) estimation of the magnitude of the force (F), at the measurement time, as a function of the attenuation signal (*Sₐₜₜ*) obtained during the step c) ;
the method being **characterized in that** :
- the contact surface (2s) is defined by a plate (2) ; and **in that** :
- during step a), each actuating transducer (10ₙ) is supplied by a power supply signal (V);
- step b) comprises a formation of a power supply signal, referred to as feedback signal, as a function of the amplitude *(A(t))* measured at each measurement time, when the measured amplitude differs from a setpoint value (A);
- the step c) comprises a formation of the attenuation signal as a function of the feedback signal (*δV*).

8. The method as claimed in claim 7, in which, during the step a), the flexural wave is formed by a plurality of actuating transducers (10ₙ), running parallel to one edge (2₁, 2₂) of the plate.

9. The method as claimed in either one of claims 7 or 8, in which:
- the resonance frequency is higher than 10 kHz;
- and/or the amplitude of the flexural wave (4), in a direction perpendicular to the contact surface (2s), is less than 10 µm, or even less than 5 µm;
- and/or the wavelength (λ) of the flexural wave (4) is in the range between 1 mm and 40 mm.

10. The method as claimed in any one of claims 7 to 10, in which the step d) comprises the following sub-steps:
di) taking into account a calibration function (*ƒ*);
dii) application of said calibration function to the attenuation signal (*Sₐₜₜ*) determined during the step c).

11. The method as claimed in any one of claims 7 to 10, in which, during the step d), the value of the estimated magnitude is assigned to a value in the range between a minimum value (*Fmin*) and a maximum value *(Fmax),* several intermediate values being included between said minimum value and said maximum value.

12. A method for controlling a device by means of a touch-sensitive interface (1) comprising a contact surface (2s) formed on a plate (2), the device being controllable by a parameter (P1, P2, P3, P4, P5, P6), the method comprising an application of an effector (5) onto the contact surface in such a manner as to adjust a value of the parameter, the method comprising the following steps:
i) application of the effector (5) onto the contact surface, in a region of the contact surface associated with said parameter;
ii) adjustment of the value of the parameter, as a function of an estimation of the force exerted by the effector on the contact surface, the estimation being obtained by implementing a method subject of any one of claims 7 to 11.

13. The method as claimed in claim 12, comprising, between the step i) and the step ii), a step i') for localizing a region of the contact surface touched by the effector, and for selecting the parameter according to the region thus localized.

14. A device, able to be controlled by a parameter (P1, P2, P3, P4, P5, P6), and comprising a touch-sensitive interface (1) configured for adjusting a value of said parameter as a function of a force applied, by an effector (5), onto a contact surface (2s) of a wall (2) of the touch-sensitive interface, the touch-sensitive interface being the subject of any one of claims 1 to 6.

15. The device as claimed in claim 14, in which the touch-sensitive interface also comprises a circuit designed to localize a region of the contact surface touched by the effector, and a circuit configured for selecting the parameter as a function of said region.
